# EUROPEAN PATENT APPLICATION

(11) **EP 4 487 725 A1**
(43) Date of publication of application: **08.01.2025**
(21) Application number: 24186740.7
(22) Date of filing: 05.07.2024
(51) Int. Cl.: A42B 3/04

(54) **POWERED HELMET ACCESSORY RAIL WITH SLOT INTERFACE**

(30) Priority: 07.07.2023 US 202363525620 P
(71) Applicant: Wilcox Industries Corp., Newington, NH 03801 (US)
(72) Inventor: TEETZEL, James W., Newington, NH 03801 (US); TURNER, Elliott S., Newington, NH 03801 (US)
(74) Representative: FRKelly

(57) **Abstract**

A rail interface system for connecting a helmet accessory component to a helmet comprises an interface body configured for attachment to an exterior surface of a helmet. The interface body is configured for attachment of the helmet accessory component. A slotted interface portion on the interface body has opposing first and second surfaces. At least one elongated rail opening extends through the slotted interface portion and is configured to receive a retention clip on the helmet accessory device for detachably securing the helmet accessory device to the rail interface system. At least one electrical connector is positioned adjacent a respective one of the at least one elongated rail opening. The at least one electrical connector is operational to provide one or both of electrical power and data communication to the helmet accessory component when the helmet accessory component is attached to the rail interface system.

## Description

### CROSS REFERENCE TO RELATED APPLICATION

This application claims the priority benefit of U.S. provisional application no. 63/525,620 filed July 7, 2023. The aforementioned application is incorporated herein by reference in its entirety.

### BACKGROUND

The present invention relates to helmet mounts and, in particular, to helmet mounted accessory rail with power and data connection.

Advantages and benefits of the present invention will become apparent to those of ordinary skill in the art upon reading and understanding the following detailed description of the preferred embodiments.

### SUMMARY

In one aspect, a rail interface system is provided for connecting a helmet accessory component to a helmet. The rail interface system comprises an interface body configured for attachment to an exterior surface of a helmet. The interface body is also configured for attachment of the helmet accessory component thereto. A slotted interface portion on the interface body has a first surface and a second surface opposite the first surface. At least one elongated rail opening extends through the slotted interface portion and is configured to receive a retention clip on the helmet accessory device for detachably securing the helmet accessory device to the rail interface system. At least one electrical connector is positioned adjacent a respective one of the at least one elongated rail opening, the at least one electrical connector being operational to provide one or both of electrical power and data communication to the helmet accessory component when the helmet accessory component is attached to the rail interface system.

In a more limited aspect, the least one elongated rail opening is bounded by an inward flange and the retention clip is a rotatable, generally T-shaped retention clip configured to pass through the at least one elongated rail opening when the generally T-shaped retention clip is rotated to an unlocked orientation parallel to a longitudinal axis of the at least one elongated rail opening. The at least one elongated rail opening is configured for clamping engagement of the inward flange when the generally T-shaped retention clip is rotated to a locked orientation perpendicular to the longitudinal axis of the at least one elongated rail opening.

In another more limited aspect, the at least one elongated rail opening conforms to an M-LOK(TM) rail standard.

In another more limited aspect, the slotted interface portion includes a plurality of elongated rail openings and a plurality of electrical connectors.

In another more limited aspect, the at least one electrical connector is a USB-C receptacle connector which is arranged to align with a USB-C plug on the helmet accessory component.

In another more limited aspect, the rail interface system herein is provided in combination with the helmet accessory component.

In another more limited aspect, the helmet accessory component is selected from the group consisting of circumaural devices, headphones, communications headsets, hearing protection devices, flashlights, tactical lights, cameras, and video recording devices.

In another more limited aspect, the at least one electrical connector is operably coupled to a circuit board disposed within the interface body.

In another more limited aspect, the rail interface system comprises a multiconductor cable electrically coupled to the circuit board, the multiconductor cable disposed on an inward facing side of the interface body.

In another more limited aspect, the multiconductor cable is configured to electrically couple the helmet accessory component to an external power source.

In another more limited aspect, the rail interface system further comprises a battery adapter configured to detachably receive and electrically couple to one or more battery packs.

Advantages and benefits of the present development will become apparent to those of ordinary skill in the art upon reading and understanding the following detailed description of the preferred embodiments.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is a side view of a helmet employing an exemplary embodiment helmet mounted accessory rail with an exemplary attached accessory.
FIG. 2 is a partially exploded isometric view of the helmet mounted accessory rail and accessory appearing in FIG. 1.
FIG. 3 is a side view of the helmet mounted accessory rail with attached accessory appearing in FIG. 1.
FIG. 4 is a cross-sectional view of the helmet mounted accessory rail and accessory taken along the lines 4 - - 4 appearing in FIG. 3.
FIG. 5 is a side view of the helmet mounted accessory rail appearing in FIG. 1.
FIG. 6 is a cross-sectional view of the helmet mounted accessory rail taken along the lines 6 - - 6 appearing in FIG. 5.
FIG. 7 is an enlarged view of the region 7 appearing in FIG. 6.
FIG. 8 is an enlarged right side view of the accessory device appearing in FIG. 1.
FIG. 9 is an enlarged front view of the accessory device appearing in FIG. 1.
FIG. 10 is an enlarged left side view of the accessory device appearing in FIG. 1.
FIG. 11 is a rear isometric view of the helmet mounted accessory rail herein taken generally from the helmet facing side and being coupled to a rear bridge module/battery adapter.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope thereof. For instance, features illustrated or described as part of one embodiment may be used in another embodiment to yield a still further embodiment. Thus, it is intended that the present invention covers such modifications and variations as come within the scope of the appended claims.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

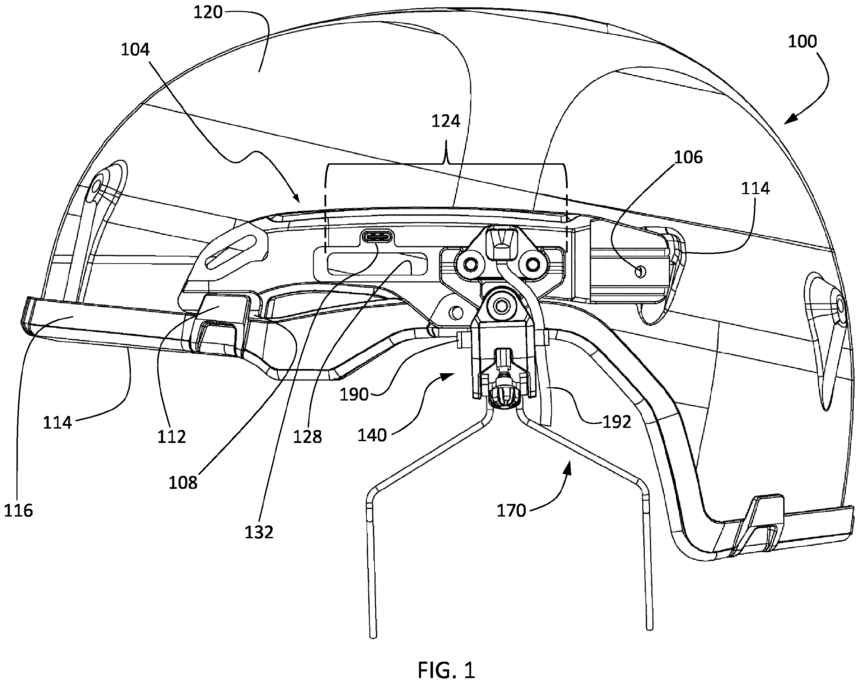

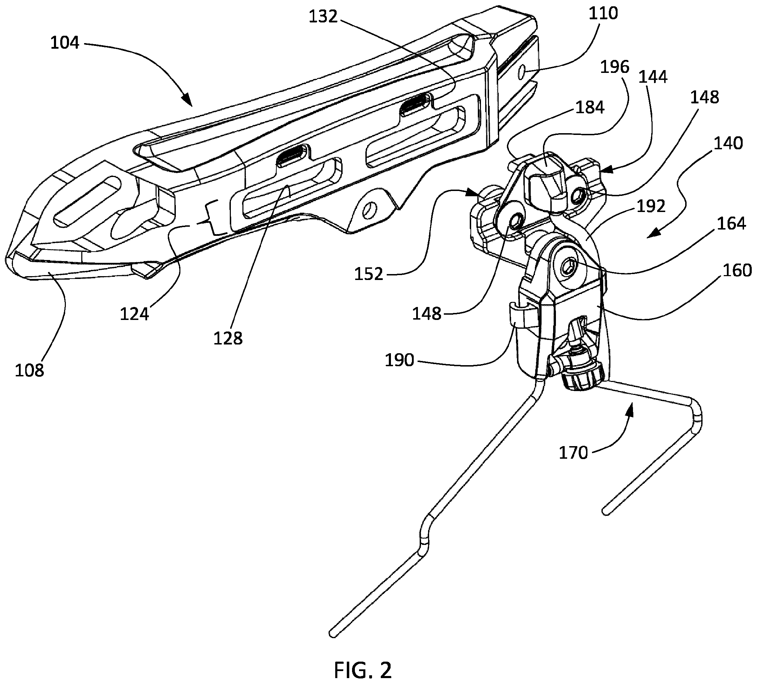

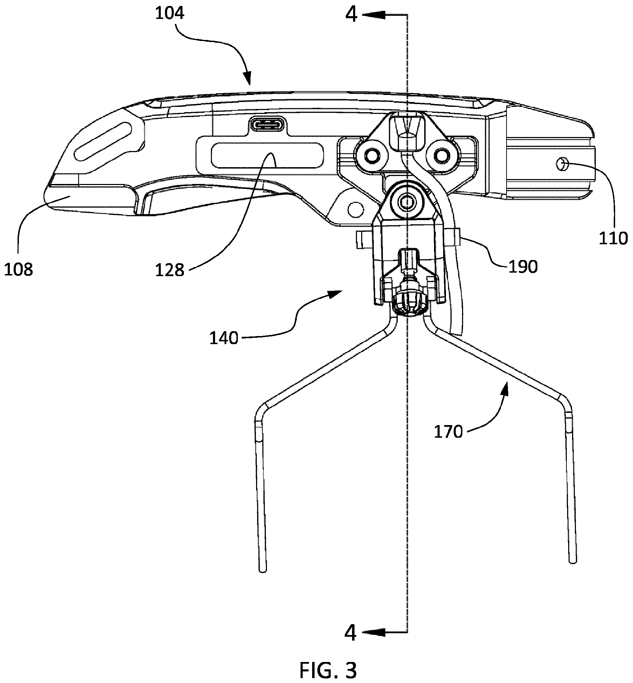

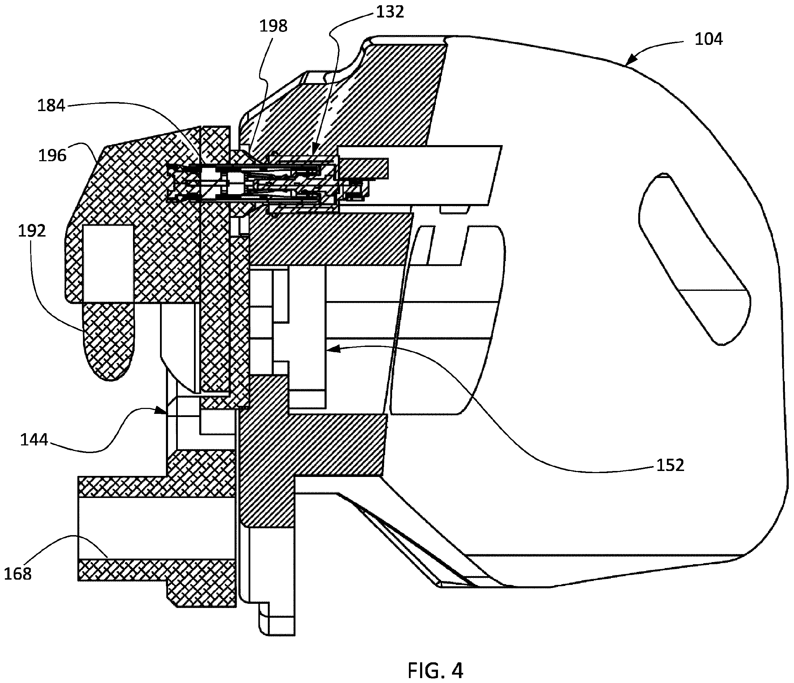

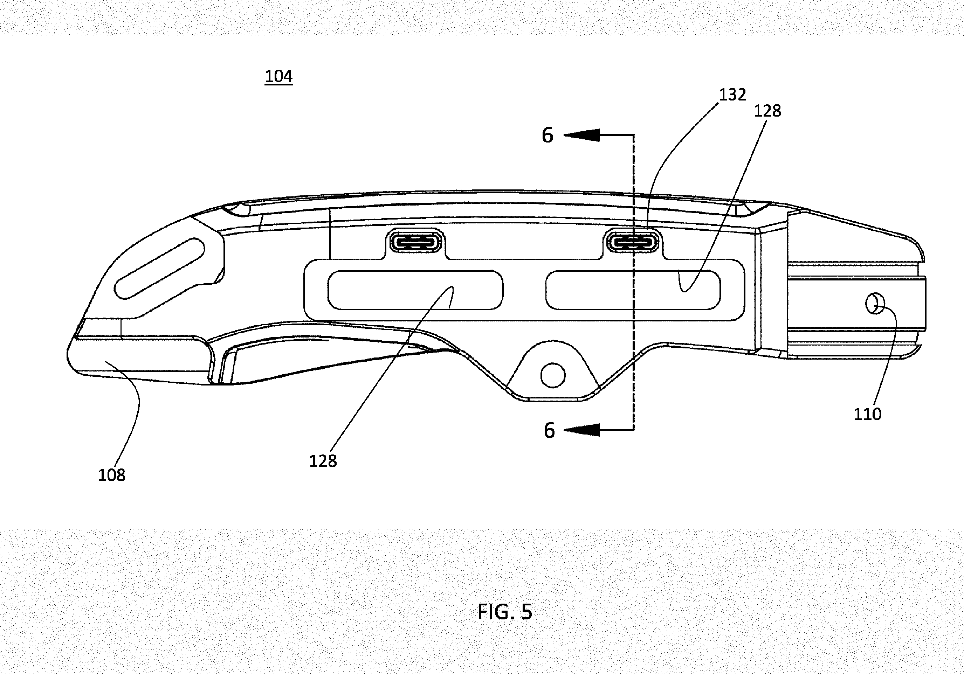

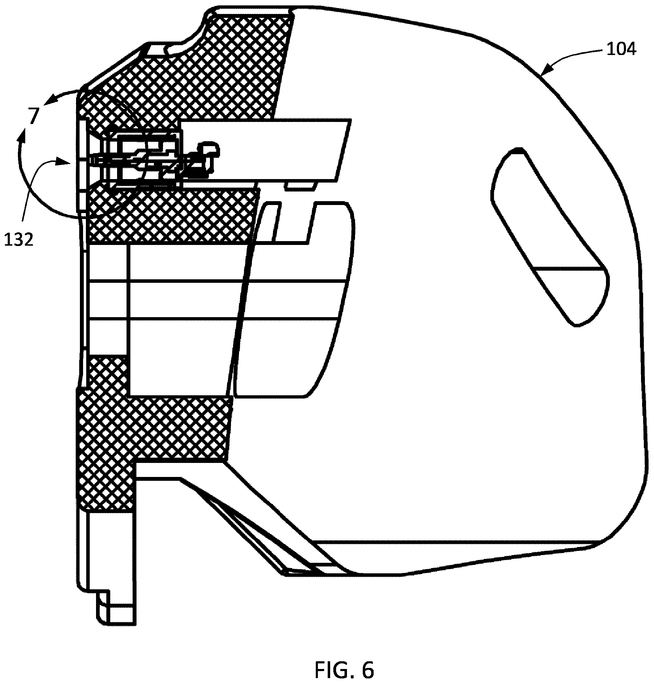

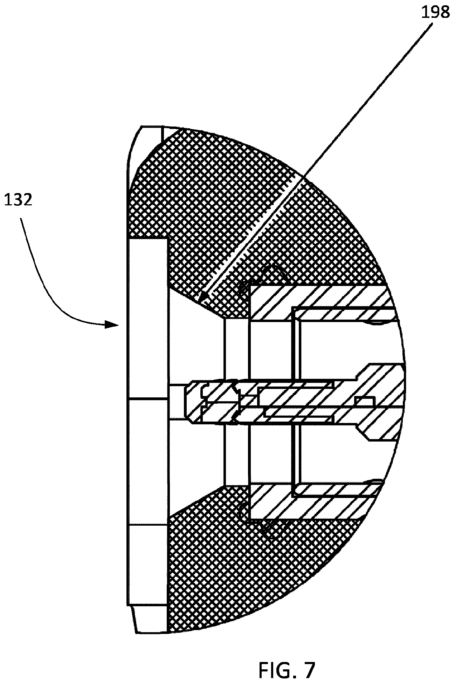

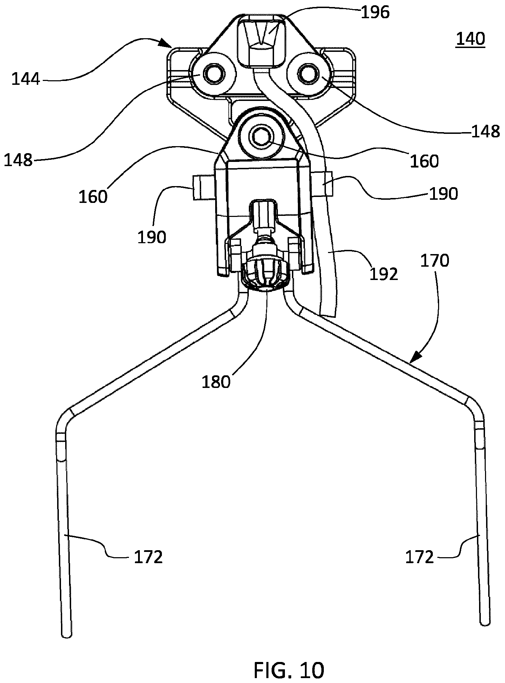

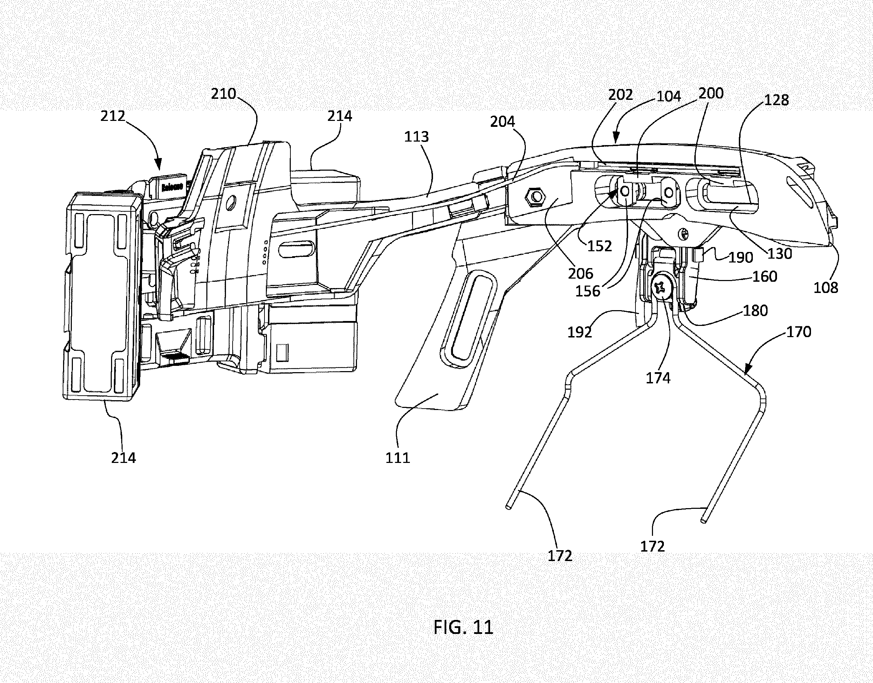

Referring now to the drawing FIGS. 1-11, FIG. 1 is a left side view of a helmet 100 having a side mounted accessory rail or shroud **104.** In the illustrated embodiment, a left side shroud **104** is illustrated. It will be recognized that the left side shroud is a mirror image thereof. The rail **104** includes a blade, tab, tongue, or the like **108** for releasable retention within a clip or catch **112** disposed on a brim **114** of the helmet **100.** In embodiments, the helmet brim **114** is defined by a separately formed edge trim piece **116** that is separately formed and attached to an edge (e.g., an unfinished edge) of a shell portion **120** of the helmet **100.** Alternately, the edge trim **116** may be integrally or monolithically formed with the shell portion **120.** The rear portion of the rail **104** is attached via a threaded fastener **106** passing through a clearance opening **110** in the rail which engages a tapped opening in a boss **114** disposed on the shell. In embodiments, a rail portion **105** is provided to allow attaching one or more additional helmet rail interface components **111, 113** (see FIG. 11).

The rail **104** defines a slot rail interface portion **124** comprising a plurality of elongate slots **128.** Each slot **128** has a peripheral inward flange **130** having a thickness and extending between the first or outer surface of the slot rail interface portion **124** and the second or rear surface of the slot rail interface portion **124.** Each slot **128** has an associated power/data interface port or receptacle **132** for routing any one or more of power, data, and control signal between an attached accessory device and the helmet. In embodiments, the power/data port **132** is a USB type C (USB-C) port configured to allow insertion of a USB-C plug for data transfer, charging, or other functionalities. In embodiments, the slots **128** may comprise a Modular Lock or M-LOK(TM) (Magpul Industries Corp., Austin, TX) compatible mounting interface slots, or slots compatible with similar systems.

An accessory device **140** is detachably connected to the rail **104.** In the illustrated embodiment, the accessory device **140** is a circumaural device, such as headphones, a communications headset or earpiece, hearing protection device, or the like. It will be recognized that other types of accessory devices are also contemplated, such as flashlights or tactical lights, cameras, or video recording devices.

The accessory device **140** includes a base **144** having a long axis which extends parallel to the long axis of the corresponding elongate slot **128.** A pair of spaced apart threaded fasteners **148** are provided. Each threaded fastener **148** passes through a clearance opening **150** in the base **144** and engages a rotatable retention clip **152.** Each retention clip **152** includes opposing extending tab portions **156** which cooperate to form a crossbar defining a T-shape, wherein the tabs **156** form the arms of the "T." Rotation of the fastener **148** allows for selectively tightening/clamping and loosening/unclamping the base **144** to the slot **128.**

In embodiments, the corners of the tab portions **156** of the retention clips **152** can be selectively radiused or rounded to permit the clips **152** to rotate when the threaded fasteners **148** are rotated and selectively squared to act as stops to prevent rotation of the clips **152** when the threaded fasteners **148** are rotated, i.e., depending on the direction of rotation and current position of the clips **152.** Alternately, in certain embodiments, stop members may be provided within the interior of the rail **104** adjacent to the slots **128** to limit rotation of the retention clips **152.**

To secure the base **144** to the slot **128,** both retention clips **152** are rotated so that the tabs portions **156** are aligned with the long axis of the slot **128** to allow the tabs portions **156** to pass through the slot **128.** Thereafter, the fasteners **148** are tightened, which causes the retention clips **152** to rotate 90 degrees until the long axis of the tabs **156** is perpendicular to the long axis of the slot **128** thereby securing the base **144** to the rail **104.** The facing surface of the base **144** and the tabs **156** define a channel which can be adjusted using the threaded fastener **148** to accommodate the thickness of the inward flange **130** to provide clamping engagement of the inward flange **130** when the tabs **156** are rotated to the locked position.

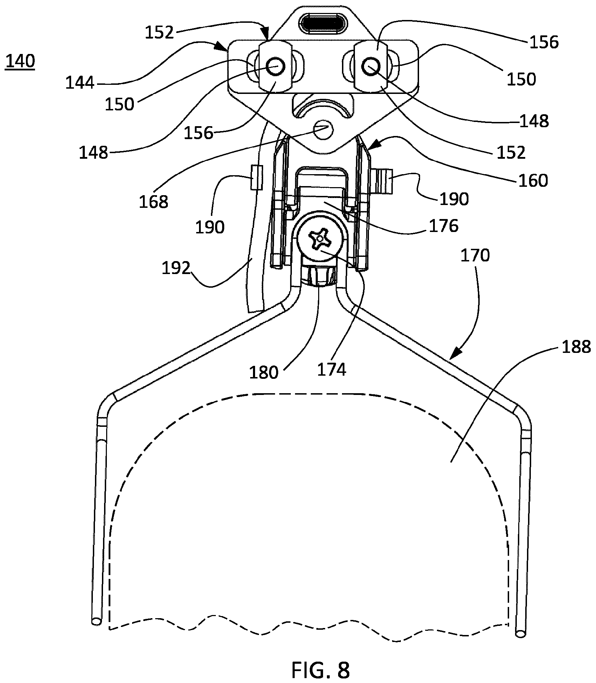

The accessory device **140** further includes a bracket **160.** A threaded fastener 164 passes through a clearance opening (not shown) in the bracket **160** and threadably engages a tapped opening **168** in the base **144.** A wire yoke **170** is secured to the bracket **160** with a threaded fastener **174.** The wire yoke **170** includes a pair of spaced apart wire legs **172** to which a communication headset or headphone ear cup **188** (see FIG. 8) of the circumaural device may attached.

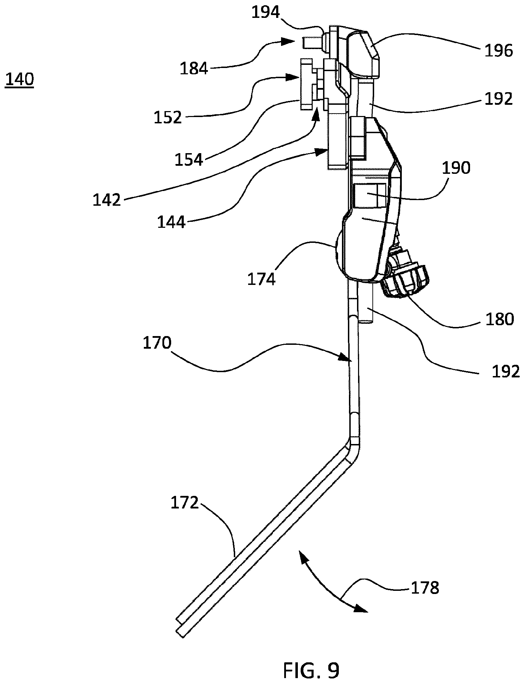

In embodiments, the wire yoke **170** is attached to a bracket pivot member **176** that is pivotable in relation to the main bracket housing to the allow the yoke **170** to be pivoted toward and away from the user's head as indicated by the arrow **178** in FIG. 9. An adjustment screw **180** on the bracket **160** bears against the bracket pivot member **176** and can be advanced or retracted to allow fine tuning of the pressure of the ear cup **188** against the user's head.

In the illustrated embodiment, the base **144** includes an electrical connector **184,** which is a USB type-C (USB-C) plug in the illustrated embodiment The connector **184** is aligned with the connector **132** on the rail **104.** In embodiments, the connectors **132, 184** are weatherized via the interfacing geometry. In embodiments, one or more sealing rings may be provided. The connector **132,** in turn, is operably coupled to one or more other accessory devices (not shown), such as computer-based system or controller, power supply, communication system, and so forth. In embodiments, the connector **132** is a USB-C socket which includes an angled sealing surface **198** which engages a complementary facing angled sealing surface **194** on the plug **184.** In embodiments, one or both of the sealing surfaces may be formed of an elastomeric material. In embodiments, one or both of the sealing surfaces may be formed of a thermoplastic material.

A multi-conductor cable **192** (shown in fragmentary view for illustration purposes) passes through a connector housing portion **196** on the base **144.** In embodiments, the cable **192** is retained with a cable retention clip **190.** In embodiments, the multi-conductor cable **192** passes audio information between an attached ear cup **188** and a communications system or a computer-based information handling system, such as a helmet communications system or a helmet computer or controller. In embodiments, audio information is transmitted in one direction or in both directions. For example, in embodiments, an audio signal can be sent from a communications system or a computer-based information handling system operatively coupled to the helmet **100** to an earphone **188** on the accessory device **140.** In embodiments, an audio signal can be sent from a microphone associated with the earphone **188** on the accessory device **140** (such as a microphone attached to a boom attached to the headset **188)** to a communications system or a computer-based information handling system. In embodiments, the audio information is transmitted as an analog signal wherein the plug **184** and socket **132** act as a pass through for the analog audio signals. Alternatively, the audio information is transmitted as a digital audio signal whereupon it is decoded by digital-to-analog conversion (DAC) circuitry in the receiving device.

As best seen in FIG. 11, each receptacle **132** includes a rear housing **200** supporting conductors or pins which are coupled to a printed circuit board **202.** A multiconductor cable **204** is electrically coupled to the circuit board **202.** The multiconductor cable **204** may be a multicore cable, ribbon cable, flexible flat cable, or the like. The cable **204** is run within a channel or cavity **206** formed in the inward facing side of the rail shroud **104** to one or more additional interface components. In the illustrated embodiments, the conductors within the cable **204** are in electrical communication with respective conductors on a rear shroud or bracket **210.** In embodiments, the cable **204** terminates in a USB-C connector which connects to a complementary USB-C connector (not shown) on the battery adapter/bridge **212.**

The rear shroud **210,** in turn, is configured to mechanically and electrically attach to a battery adapter **212.** The battery adapter **212** detachably receives one or more battery packs **214** for providing electrical power for one or more attached accessory devices and provides a bridge for coupling left and right side shrouds to the power, data, and control signals circuitry. In embodiments, the battery adapter or bridge may be as described in commonly owned U.S. provisional application no. 63/427,496 filed November 23, 2022; U.S. application no. 18/500,657 filed November 2, 2023; U.S. provisional application no. 63/433,661 filed December 19, 2022; U.S. application no. 18/544,128 filed December 18, 2023; 63/454,691 filed March 26, 2023; U.S. application no. 18/614,070 filed March 22, 2024; 63/461,538 filed April 24, 2003; U.S. application no. 18/636,599 filed April 16, 2024; 63/464,738 filed May 8, 2023; and U.S. application no. 18/651,188 filed April 30, 2024. Each of the aforementioned applications is incorporated here by reference in its entirety.

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims.

## Claims

1. A rail interface system for connecting a helmet accessory component to a helmet, the rail interface system comprising:
an interface body configured for attachment to an exterior surface of a helmet, the interface body configured for attachment of the helmet accessory component thereto;
a slotted interface portion on the interface body, the slotted interface portion having a first surface and a second surface opposite the first surface;
at least one elongated rail opening extending through the slotted interface portion;
the at least one elongated rail opening configured to receive a retention clip on the helmet accessory device for detachably securing the helmet accessory device to the rail interface system; and
at least one electrical connector positioned adjacent a respective one of the at least one elongated rail opening, the at least one electrical connector operational to provide one or both of electrical power and data communication to the helmet accessory component when the helmet accessory component is attached to the rail interface system.

2. The rail interface system of claim 1, further comprising:
said at least one elongated rail opening bounded by an inward flange;
said at least one elongated rail opening configured to receive the retention clip, wherein the retention clip is a rotatable, generally T-shaped retention clip configured to pass through the at least one elongated rail opening when the generally T-shaped retention clip is rotated to an unlocked orientation parallel to a longitudinal axis of the at least one elongated rail opening; and
said at least one elongated rail opening configured for clamping engagement of the inward flange when the generally T-shaped retention clip is rotated to a locked orientation perpendicular to the longitudinal axis of the at least one elongated rail opening.

3. The rail interface system of claim 1 or claim 2, wherein the at least one elongated rail opening conforms to an M-LOK(TM) rail standard.

4. The rail interface system of any of the preceding claims, wherein the slotted interface portion includes a plurality of elongated rail openings and a plurality of electrical connectors.

5. The rail interface system of any of the preceding claims, wherein the at least one electrical connector is a USB-C receptacle connector which is arranged to align with a USB-C plug on the helmet accessory component.

6. The rail interface system of any of the preceding claims, in combination with the helmet accessory component.

7. The rail interface system of claim 6, wherein the helmet accessory component is selected from the group consisting of circumaural devices, headphones, communications headsets, hearing protection devices, flashlights, tactical lights, cameras, and video recording devices.

8. The rail interface system of any of the preceding claims, wherein the at least one electrical connector is operably coupled to a circuit board disposed within the interface body.

9. The rail interface system of claim 8, further comprising a multiconductor cable electrically coupled to the circuit board, the multiconductor cable disposed on an inward facing side of the interface body.

10. The rail interface system of claim 9, wherein the multiconductor cable is configured to electrically couple the helmet accessory component to an external power source.

11. The rail interface system of claim 10, further comprising a battery adapter, the battery adapter configured to detachably receive and electrically couple to one or more battery packs.
